(19) **Europäisches Patentamt / European Patent Office / Office européen des brevets**

(11) **EP 3 563 142 B1**

(12) **FASCICULE DE BREVET EUROPEEN**

(45) Date de publication et mention de la délivrance du brevet:
**07.06.2023 Bulletin 2023/23**

(21) Numéro de dépôt: **17832541.1**

(22) Date de dépôt: **27.12.2017**

(51) Classification Internationale des Brevets (IPC):
**G01N 23/087** (2018.01)

(52) Classification Coopérative des Brevets (CPC):
**G01N 23/087**

(86) Numéro de dépôt international:
**PCT/FR2017/053854**

(87) Numéro de publication internationale:
**WO 2018/122534 (05.07.2018 Gazette 2018/27)**

(54) **PROCÉDÉ DE TRAITEMENT D'UN SPECTRE D'UN RAYONNEMENT TRANSMIS PAR UN OBJET**

VERFAHREN ZUR VERARBEITUNG EINES SPEKTRUMS VON STRAHLUNG, DIE VON EINEM OBJEKT ÜBERTRAGEN WIRD

METHOD FOR PROCESSING A SPECTRUM OF RADIATION TRANSMITTED BY AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2016 FR 1663553**

(43) Date de publication de la demande:
**06.11.2019 Bulletin 2019/45**

(73) Titulaire: **Commissariat à l'énergie atomique et aux énergies alternatives 75015 Paris (FR)**

(72) Inventeur: **REBUFFEL, Veronique 38700 Corenc (FR)**

(74) Mandataire: **INNOV-GROUP 310, avenue Berthelot 69372 Lyon Cedex 08 (FR)**

(56) Documents cités:
**EP-A1- 2 930 540     US-A1- 2016 054 453**

- **ALVAREZ ROBERT: "Near optimal energy selective x-ray imaging system performance with simple detectors", MEDICAL PHYSICS, AIP, MELVILLE, NY, US, vol. 37, no. 2, 27 janvier 2010 (2010-01-27), pages 822-841, XP012135607, ISSN: 0094-2405, DOI: 10.1118/1.3284538**
- **BELDJOUDI GUILLAUME ET AL: "An optimised method for material identification using a photon counting detector", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 663, no. 1, 28 septembre 2011 (2011-09-28), pages 26-36, XP028598841, ISSN: 0168-9002, DOI: 10.1016/J.NIMA.2011.09.002**

**Description**

## DOMAINE TECHNIQUE

Le domaine technique de l'invention est l'analyse d'un objet par une irradiation de ce dernier par un rayonnement électromagnétique ionisant, et d'une acquisition d'un spectre d'un rayonnement transmis par l'objet.

## ART ANTERIEUR

L'analyse d'objets par irradiation à l'aide de rayonnements électromagnétiques ionisants, par exemple un rayonnement X ou gamma permet d'estimer la nature des matériaux composant cet objet. Cette analyse peut être bidimensionnelle, de type radiographie. Il peut également s'agir d'une analyse tridimensionnelle, de type tomographie. Une telle analyse peut être réalisée à des fins de diagnostic médical, de contrôle non destructif dans le domaine industriel, ou encore dans la détection de matériaux sensibles, par exemple dans le contrôle de bagages.

Récemment, l'émergence de détecteurs spectralement résolus a permis d'améliorer sensiblement les performances de ces analyses. De tels détecteurs permettent d'acquérir un spectre d'un rayonnement transmis par un matériau irradié. Ce spectre comporte plusieurs canaux, chaque canal étant représentatif d'une bande d'énergie. Un tel spectre peut généralement comporter des dizaines voire des centaines de canaux. Généralement, plusieurs spectres d'un même objet sont acquis, de façon à reconstruire l'objet, c'est-à-dire obtenir une distribution spatiale de caractéristiques de l'objet. Il peut s'agir d'une estimation de la distribution spatiale de la densité et ou du numéro atomique de l'objet, ou d'une estimation de la nature de matériaux présents dans l'objet.

Par exemple, la publication Alvarez R "Near optimal energy selective x-ray imaging system performance with simple detectors", Med. Phys. 37 (2), February 2010 décrit par exemple une détermination de la nature d'un matériau en décomposant un spectre représentant une atténuation de l'énergie par une somme pondérée de deux fonctions spectrales d'atténuation.

Une pratique courante est alors de regrouper les canaux, de façon à concentrer l'information sur un nombre raisonnable de canaux, généralement compris entre 2 et 20, et typiquement 5. Un tel regroupement permet d'optimiser la reconstruction, en particulier le rapport signal sur bruit. Le regroupement est fréquemment effectué par des circuits électroniques, en sortie de détecteurs. Le document US2016/0054453 décrit un regroupement de spectres de part et d'autre d'une raie d'absorption K, le regroupement étant appliqué à la réalisation d'une analyse d'un objet par tomographie. L'article BELDJOUDI GUILLAUME ET AL "An optimised method for material identification using a photon counting detector" in Nuclear Instruments and Methods in Physics Research. Section A: Accelerators, Spectrometers, Detectors and Associated Equipment", Elsevier BV NORTH-HOLLAND, vol. 663, no. 1, 28 septembre 2011 (2011-09-28), pages 26-36, ISSN: 0168-9002, DOI: 10.1016/J.NIMA.2011.09.002 décrit une étude visant à utiliser un détecteur spectrométrique pour caractériser un matériau. L'objectif de cette étude est d'optimiser les bornes de bandes d'énergies en fonction du nombre de bandes d'énergies considérées. Pour chacune des bandes d'énergies et en prenant en compte différents critères statistiques, on définit des bornes considérées comme optimales.

En suivant des protocoles de traitement connus, il est alors possible de décomposer l'objet en différentes mailles élémentaires et d'estimer la nature des matériaux composant chaque maille. L'invention est un perfectionnement d'un tel procédé d'analyse, à partir d'un détecteur spectrométrique, permettant d'obtenir une estimation plus précise des matériaux constituant un objet. L'invention peut être mise en oeuvre préalablement ou durant une reconstruction tomographique, auquel cas la qualité de la reconstruction est améliorée.

## EXPOSE DE L'INVENTION

Un objet de l'invention est un procédé d'analyse d'un objet comportant les étapes suivantes :

a) irradiation de l'objet à l'aide d'une source de rayonnement, ladite source émettant un rayonnement électromagnétique ionisant se propageant vers l'objet ;
b) obtention d'un spectre d'un rayonnement transmis par l'objet à l'aide d'un détecteur de rayonnement, appartenant à un dispositif de détection; le spectre ainsi mesuré comportant plusieurs de canaux élémentaires, chaque canal élémentaire étant associée à une bande d'énergie ;
c) à partir du spectre obtenu, formation d'un spectre de regroupement constitué de plusieurs canaux, dits canaux de regroupement, au moins un canal de regroupement étant obtenu en regroupant, selon un critère de regroupement prédéterminé, plusieurs canaux élémentaires, la valeur du spectre de regroupement en chaque canal de regroupement étant fonction de la valeur du spectre, obtenu lors de l'étape b), mesuré en chaque canal élémentaire ainsi regroupé ;
d) sélection d'une base comportant des vecteurs de base, dont chaque terme représente une atténuation du rayonnement électromagnétique ionisant dans une plage d'énergie associée à chaque canal de regroupement ;
e) obtention de coordonnées d'une atténuation correspondant au spectre de regroupement, formé lors de l'étape c), dans la base sélectionnée lors de l'étape d) ;
f) estimation d'une caractéristique de l'objet en fonction des coordonnées obtenues lors de l'étape e).

L'étape c) peut comporter, pour chaque canal de regroupement, les sous étapes suivantes :

- en fonction du critère de regroupement, association d'une plage de regroupement, définissant les canaux élémentaires regroupés dans le canal de regroupement ;
- prise en compte d'une fonction de regroupement, de telle sorte que la valeur du spectre de regroupement au canal de regroupement soit déterminé en appliquant la fonction de regroupement à la valeur du spectre, obtenu lors de l'étape b), dans chaque canal élémentaire ainsi regroupé.

Lors de l'étape c), la valeur attribuée à chaque canal de regroupement peut être une somme ou une somme pondérée de la valeur du spectre, obtenu lors de l'étape b), en chaque canal élémentaire regroupé. Lorsqu'il s'agit d'une somme pondérée, le contenu de chaque canal élémentaire est affecté d'un coefficient de pondération dépendant de la bande d'énergie associée audit canal élémentaire.
Lors de l'étape c), le critère de regroupement peut être un critère d'uniformité, selon lequel les valeurs respectives de chaque canal de regroupement composant le spectre de regroupement sont égales, à une tolérance près.
Lors de l'étape d), chaque terme des vecteurs de base est défini pour chaque canal de regroupement et correspond, dans la plage d'énergie associée audit canal de regroupement,

- soit à une atténuation d'un matériau de calibration ;
- soit à une proportion relative d'atténuation photoélectrique ou de diffusion Compton dans ladite plage d'énergie;
- soit à une discontinuité spectrale.

Le dispositif de détection peut comporter une pluralité de détecteurs de rayonnements adjacents les uns des autres, les étapes b) à e) étant mises en oeuvre pour chaque détecteur de rayonnement, de telle sorte que :

- chaque étape c) est mise en oeuvre en considérant un même critère ;
- lors de chaque étape e), chaque spectre de regroupement est décomposé en un même nombre de coordonnées.
- lors de l'étape f), l'estimation d'une caractéristique de l'objet est réalisée à partir des coordonnées obtenues dans chaque étape e).

Le procédé peut comporter une répétition des étapes b) à e), de telle sorte que

- chaque étape b), comporte une mesure d'un spectre dans une position différente du détecteur relativement à l'objet ;
- chaque étape c) est mise en oeuvre en considérant un même critère ;
- éventuellement, lors de chaque étape e), le spectre de regroupement est associé à un même nombre de coordonnées ;
- lors de l'étape f), l'estimation d'une caractéristique de l'objet est réalisée à partir des coordonnées obtenues dans chaque étape e)

L'étape f) peut comporter :

- une discrétisation de l'objet en mailles bidimensionnelles ou tridimensionnelles ;
- une estimation d'une atténuation dans chaque maille ou de la nature de matériau composant chaque maille à partir des coordonnées obtenues lors de chaque étape e).

Selon un mode de réalisation, lors de l'étape c), le nombre de canaux du spectre de regroupement est égal à 2, de telle sorte que la formation du spectre de regroupement comporte une détermination d'un seuil, dit seuil de regroupement, de telle sorte que le premier canal du spectre de regroupement rassemble les canaux élémentaires du spectre obtenu lors de l'étape b), correspondant à une énergie inférieure au seuil de regroupement, et que le deuxième canal de regroupement rassemble les canaux élémentaires dudit spectre obtenu correspondant à une énergie supérieure au seuil de regroupement.
Le nombre de canaux du spectre obtenu lors de l'étape b) peut être faible, par exemple compris entre 3 et 10. Le nombre de canaux du spectre de regroupement formé lors de l'étape c) est supérieur ou égal à 2.
Un autre objet de l'invention est un dispositif de détection d'un rayonnement ionisant comportant :

- un détecteur de rayonnement apte à interagir avec un rayonnement électromagnétique ionisant, chaque pixel comportant un circuit électronique apte à générer un signal dont l'amplitude dépend d'une énergie déposée par le rayonnement interagissant dans ledit détecteur;
- un circuit dit de spectrométrie, permettant d'obtenir une répartition de signaux générés par le détecteur de rayonnement en fonction de leur amplitude, de façon à former un spectre représentatif de ladite répartition ;
- une unité de traitement apte à mettre en oeuvre les étapes c) à f) d'un procédé tel que décrit dans cette demande à l'aide des spectres formés par le circuit de spectrométrie.

Le dispositif peut comporter différents détecteurs, chaque détecteur formant un pixel, de façon à former un dispositif de détection pixelisé.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente un dispositif d'analyse d'un objet selon l'invention.

La figure 1B schématise les étapes d'un procédé d'analyse d'un objet selon l'invention.

La figure 1C représente une distribution en énergie d'un rayonnement. La figure 1D est un spectre obtenu à partir de la distribution représentée sur la figure 1C. La figure 1E est un exemple de formation d'un spectre de regroupement selon l'art antérieur.

La figure 2A représente un spectre d'un rayonnement émis par une source d'irradiation et détecté par un détecteur, sans objet entre la source d'irradiation et le détecteur. La figure 2B représente un spectre d'un rayonnement transmis par un premier objet, et détecté par un détecteur. La figure 2C représente le spectre, illustré sur la figure 2B, obtenu après un regroupement en deux canaux selon l'art antérieur. La figure 2D représente un spectre obtenu après un regroupement selon deux canaux effectué selon l'invention.

La figure 3A représente un spectre d'un rayonnement transmis par un deuxième objet, et acquis par un détecteur. La figure 3B représente le spectre, illustré sur la figure 3A, obtenu après un regroupement en deux canaux selon l'art antérieur. La figure 3C représente un spectre obtenu après un regroupement selon deux canaux effectué selon l'invention.

La figure 4A représente un spectre d'un rayonnement transmis par un troisième objet, et acquis par un détecteur. La figure 4B représente le spectre, illustré sur la figure 4A, obtenu après un regroupement en deux canaux selon l'art antérieur. La figure 4C représente un spectre obtenu après un regroupement selon deux canaux effectué selon l'invention.

La figure 5 montre différents spectres de rayonnement correspondant à différentes configurations.

Les figures 6A et 6B représentent respectivement des épaisseurs de tissus et d'os d'un fantôme étalon modélisé. La figure 6C représente une distribution spatiale bidimensionnelle d'une valeur du seuil appliqué des spectres d'un rayonnement transmis par le fantôme. La figure 6D est un profil de la figure 6C.

La figure 7A montre différentes épaisseurs d'os du fantôme de calibration utilisé.

Les figures 7B, 7C et 7D sont des profils montrant différentes les épaisseurs d'os théoriques ainsi que des épaisseurs d'os obtenues en regroupant des spectres mesurés selon l'art antérieur ou selon l'invention.

## EXPOSE DE MODES DE REALISATION PARTICULIERS

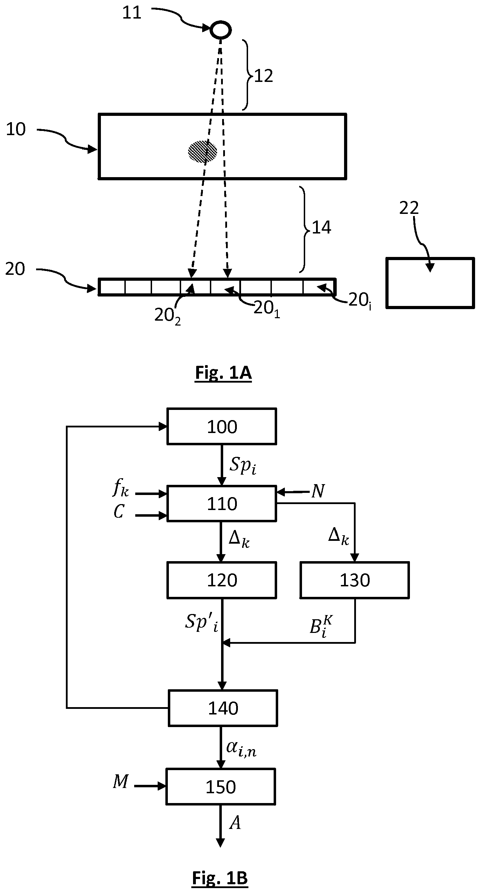

La figure 1A représente un mode de réalisation d'un dispositif 1 mettant en oeuvre un procédé selon l'invention.

Une source d'irradiation 11 émet un rayonnement électromagnétique ionisant 12, dit rayonnement incident, vers un objet 10. L'objet 10 est disposé entre la source d'irradiation 11 et un dispositif de détection 20. Le dispositif de détection comporte des détecteurs de rayonnement $20_i$ prenant la forme de pixels $20_i$ agencés selon un plan, dit plan de détection P. Sur la figure 1A, on a représenté deux pixels adjacents $20_1$ et $20_2$. L'indice i désigne les coordonnées de chaque pixel dans le plan de détection. Les pixels peuvent s'étendre selon une ligne mais en général, ils s'étendent selon une matrice régulière bidimensionnelle.

L'objet 10 peut être un tissu biologique vivant, par exemple une partie du corps d'un animal ou d'un être humain. Le dispositif 20 est alors un dispositif d'imagerie médicale. L'objet peut également être une pièce industrielle ou un bagage, le dispositif étant alors utilisé à des fins de contrôle non destructif.

Le terme rayonnement électromagnétique ionisant désigne un rayonnement électromagnétique constitué de photons d'énergie supérieure à 1 keV, et de préférence inférieure à 5 MeV. La plage d'énergie du rayonnement ionisant peut être comprise entre 1 keV et 2 MeV, mais elle s'étend le plus souvent entre 1 keV et 150 keV ou 300 keV. Le rayonnement ionisant peut être un rayonnement X ou $\gamma$. De préférence, la source de rayonnement ionisant 11 est poly-énergétique, le rayonnement incident étant émis selon une plage d'énergie s'étendant généralement selon plusieurs dizaines voire centaines de keV. Il s'agit notamment d'un tube émetteur de rayons X.

Ainsi, l'objet 10 irradié par la source 11 transmet au dispositif de détection 20 un rayonnement 14, dit rayonnement transmis, ce dernier atteignant les pixels, chacun formant un détecteur $20_i$. Chaque pixel $20_i$ est un détecteur spectrométrique comportant :

- un matériau détecteur, apte à interagir avec les photons du rayonnement 14 transmis par l'objet, ce matériau étant de type scintillateur ou, de préférence, un matériau semiconducteur compatible avec une utilisation à la température ambiante, de type CdTe, CdZnTe ;
- un circuit électronique, apte à générer un signal dont l'amplitude dépend, et est de préférence proportionnelle, à l'énergie déposée par chaque photon interagissant dans le matériau détecteur ;
- un circuit de spectrométrie, apte à établir un spectre en énergie, noté $Sp_i$, des signaux détectés pendant une période temporelle, dite période d'acquisition. Le spectre en énergie comporte des canaux, à chaque canal étant associée une bande d'énergie.

Le dispositif de détection comporte également une unité de traitement 22 permettant la mise en oeuvre des opérations de traitement décrites ci-après. L'unité de traitement peut comprendre un microprocesseur et/ou des microcontrôleurs électroniques.

Selon un autre mode de réalisation, chaque pixel est couplé à un circuit électronique comportant des comparateurs d'amplitude permettant un regroupement des impulsions collectées par chaque pixel selon différents canaux. Selon un tel mode de réalisation, la résolution spectrale, c'est-à-dire la largeur des canaux, n'est pas aussi fine que dans les détecteurs spectrométriques : le nombre de canaux est généralement compris entre 2 et 10. Un avantage de ce mode de réalisation est de pouvoir être implémenté directement dans un circuit électronique basé sur des discriminateurs d'amplitude.

Sous l'effet de l'irradiation par le rayonnement incident 12, l'objet 10 transmet un rayonnement 14, dit rayonnement transmis, vers le dispositif de détection 20, dont chaque pixel $20_i$ est apte à détecter ledit rayonnement transmis 14 et à en former un spectre en énergie $Sp_i$.

Le terme spectre en énergie correspond à un histogramme de l'amplitude des signaux détectés au cours d'une période d'acquisition du spectre. Une relation entre l'amplitude A et l'énergie E peut être obtenue par une fonction d'étalonnage en énergie $g$ telle que $E = g(A)$, selon des principes connus de l'homme du métier. Un spectre d'énergie $Sp_i$ est donc un vecteur, dont chaque terme $Sp_i(h)$ représente une quantité de rayonnement détecté par le pixel $20_i$ dans

une plage d'énergie $\delta E = E \pm \dfrac{\partial E}{2}$ , avec $\partial E$ étant la largeur spectrale de chaque canal.

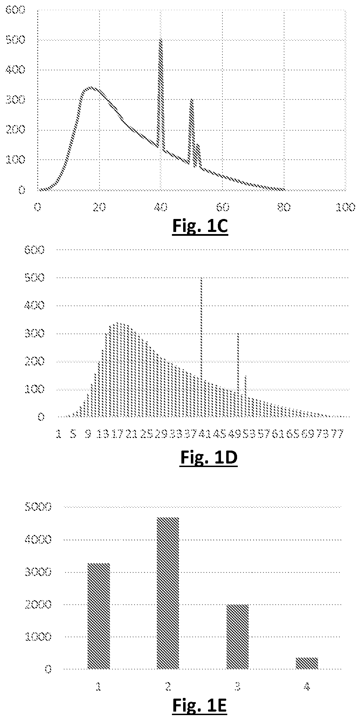

La figure 1C représente une distribution en énergie d'un rayonnement et la figure 1D représente un spectre $Sp_i$ discrétisé selon $H$ canaux $h$. Dans les procédés d'analyse de l'art antérieur, comme précédemment évoqué, chaque spectre $Sp_i$ fait l'objet d'un regroupement de canaux, de manière à former un spectre regroupé $Sp'_i$, chaque canal k du spectre regroupé regroupant l'information répartie dans des canaux adjacents du spectre initial $Sp_i$. Selon l'art antérieur, La valeur de chaque canal $Sp'_i(k)$ du spectre regroupé est constitué à partir du contenu des canaux $Sp_i(h)$ du spectre

mesuré $Sp_i$ s'étendant entre deux bornes $h^k_{min}$, $h^k_{max}$ prédéterminées. Ainsi, la valeur de chaque canal $Sp'_i(k)$ est

telle que $Sp'_i(k) = \sum_{h^k_{min}}^{h^k_{max}} Sp_i(h)\ (1)$ .

Un exemple d'un tel regroupement est représenté sur la figure 1E. Quels que soient les pixels du détecteur, les bornes du regroupement n'évoluent pas.

L'invention propose une approche différente, selon laquelle le regroupement d'un spectre dépend dudit spectre, c'est-à-dire de sa forme, sans que les bornes de regroupement soient déterminées a priori, mais adaptées à chaque spectre. Cette approche est désignée par le terme « regroupement adaptatif ». Pour cela, le regroupement est réalisé selon un critère C de regroupement prédéterminé. Le critère C peut notamment prendre en compte le contenu des canaux du spectre regroupé et/ou du spectre mesuré.

Selon un premier mode de réalisation, un tel critère est l'exigence que chaque canal k du spectre regroupé ait la même valeur $Sp'_i(k)$, ou sensiblement la même valeur, le terme sensiblement signifiant la prise en compte d'une tolérance, par exemple de l'ordre de 10% ou 20%, tenant compte de la discrétisation en énergie du spectre. Un tel critère permet une répartition uniforme du bruit, supposé poissonien, affectant le spectre. Ainsi, chaque canal de regroupement $Sp'_i(k)$ est affecté d'un même bruit. En considérant un tel critère, Le procédé selon l'invention comporte une définition des bornes de regroupement $h^k_{min}, h^k_{max}$ relative à chaque canal $k$ de telle sorte que quel que soit $k$,

$$Sp'_i(k) = \sum_{h^k_{i,min}}^{h^k_{i,max}} Sp_i(h)$$

(2) et que pour tout couple de canaux $k_m$, $k_n$ du spectre de regroupement que $Sp'_i(k_m)$ = $Sp'_i(k_n)$ (3).

Chaque canal de regroupement k est constitué en appliquant une fonction de regroupement $f_k$ à des canaux h du spectre mesuré $Sp_i$ répartis dans une plage de regroupement $\Delta_k$, la fonction de regroupement étant paramétrée pour de telle sorte que le spectre de regroupement satisfasse au critère C. Selon ce mode de réalisation, la fonction de regroupement $f_k$ est une somme du contenu $Sp_i(h)$ des canaux du spectre mesuré, ces canaux faisant partie de la plage de regroupement $\Delta_k$. Dans cet exemple, la plage de regroupement $\Delta_k$ s'étend entre deux bornes de regroupement, de telle sorte que $Sp'_i(k) = f_k( Sp_i(h))$, $h \in \Delta_k$ (4). Dans cet exemple :

- la plage de regroupement $\Delta_k$ de chaque canal de regroupement est constitué de canaux adjacents s'étendant entre une borne minimale $h^k_{min}$ et une borne maximale $h^k_{max}$ ;
- la fonction de regroupement est une somme du contenu $Sp_i(h)$ de chaque canal $h$ du spectre mesuré situé dans la plage de regroupement $\Delta_k$.

La plage de regroupement $\Delta_k$, c'est-à-dire chaque borne de regroupement $h^k_{i,min}, h^k_{i,max}$ dépend du spectre mesuré $Sp_i(h)$. De ce fait, deux spectres $Sp_i$ $Sp_j$ respectivement acquis par deux pixels différents $i, j$ d'un détecteur situé face à un même objet peuvent être regroupés en considérant des plages de regroupement différentes. De préférence, le nombre K de canaux de regroupement est le même pour l'ensemble des pixels du détecteur. Ce nombre est par exemple prédéterminé. De même, le critère selon lequel s'effectue le regroupement est préférentiellement le même pour l'ensemble des pixels du détecteur. Selon une variante, le nombre de canaux de regroupement varie d'un pixel à un autre, comme décrit par la suite, en lien avec le troisième mode de réalisation.

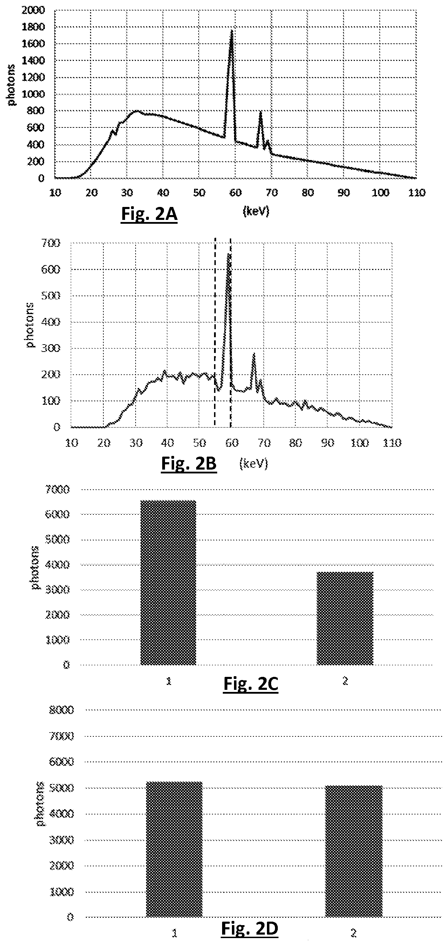

On a représenté, sur la figure 2A, un spectre $Sp_1$ mesuré par un pixel $20_1$. Il s'agit d'un spectre simulé à l'aide d'un code de calcul simulant le transport de photons. Il correspond au spectre mesuré par le pixel exposé à un rayonnement produit par une source d'irradiation 11, sans objet 10 disposé entre la source et le pixel. Un tel spectre est usuellement désigné par le terme "plein flux". La source d'irradiation 11 modélisée est une anode de tungstène soumise à un potentiel de 110 kV. Le pixel $20_1$ est un parallélépipède de CdZnTe de dimension 1 mm $\times$ 1 mm et d'épaisseur 500 $\mu$m. Les pics observés vers 57-58 keV et entre 65 keV et 70 keV correspondent à des pics de fluorescence X du matériau détecteur et du tungstène. Le spectre de la figure 2B a été obtenu en simulant un objet 10 constitué de 5 cm de tissu entre la source et le détecteur. Le tissu est constitué d'eau. La figure 2C représente un spectre de regroupement obtenu en regroupant les canaux h du spectre de la figure 2B en se basant sur un seuil arbitraire égal à 60 keV. Les impulsions d'énergie inférieure à 60 keV sont regroupées dans un premier canal de regroupement k = 1 tandis que les impulsions d'énergie supérieure à 60 keV sont regroupées dans un deuxième canal de regroupement k = 2. On observe que les contenus de chaque canal ne sont pas identiques. La figure 2D montre le résultat d'un regroupement adaptatif, selon l'invention, en se basant sur un critère d'uniformité des canaux k issus du regroupement. Selon un tel critère, après regroupement, chaque canal k regroupé comporte un même nombre d'impulsions, à une tolérance près, la tolérance étant par exemple de $\pm$ 10% ou $\pm$ 20%. Ce critère a été appliqué au spectre représenté sur la figure 2B. L'analyse du spectre a déterminé que pour satisfaire au critère de regroupement, il faut considérer un seuil, dit seuil de regroupement, de 56 keV. Le contenu des canaux h du spectre mesuré correspondant à une énergie inférieure à ce seuil sont regroupés dans un premier canal (k = 1), tandis que les canaux $h$ supérieurs à ce seuil sont regroupés dans un deuxième canal (k = 2). On obtient ainsi un spectre de regroupement $Sp'_1$, comportant deux canaux, dont chaque canal $k$ a sensiblement la même valeur. Les seuils de 60 keV et de 56 keV sont matérialisés sur la figure 2B par des lignes verticales en pointillés.

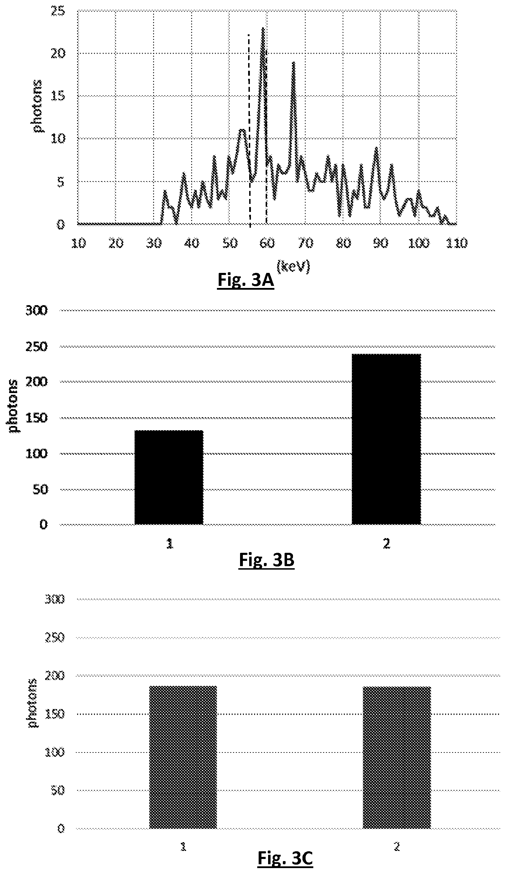

La figure 3A est un autre exemple de spectre mesuré $Sp_1$ mesuré, dans lequel l'objet 10 disposé entre la source d'irradiation 11 et le pixel $20_1$ est constitué d'une épaisseur de 20 cm de tissu.

Cela correspond à une atténuation plus importante que celle de l'exemple précédent. La figure 3B représente un spectre de regroupement obtenu en regroupant les canaux h du spectre mesurede la figure 3A en se basant sur un seuil arbitraire égal à 60 keV. Les impulsions d'énergie inférieure à 60 keV sont regroupées dans un premier canal de regroupement k = 1 tandis que les impulsions d'énergie supérieure à 60 keV sont regroupées dans un deuxième canal de regroupement k = 2. On observe que les contenus de chaque canal ne sont pas identiques. La figure 3C montre le résultat d'un regroupement adaptatif, selon l'invention, en se basant sur un critère d'uniformité des canaux issus du regroupement. Ce critère a été appliqué au spectre représenté sur la figure 3A. L'analyse du spectre a déterminé que pour satisfaire au critère de regroupement, il faut considérer un seuil de regroupement de 64 keV. Le contenu des canaux h du spectre correspondant à une énergie inférieure à ce seuil sont regroupés dans un premier canal (k = 1), tandis que les canaux h supérieurs à ce seuil sont regroupés dans un deuxième canal (k = 2). On obtient ainsi un spectre de regroupement Spi, comportant deux canaux, dont chaque canal k a sensiblement la même valeur. Les seuils de 60 keV et de 64 keV sont matérialisés sur la figure 3A par des lignes verticales en pointillés.

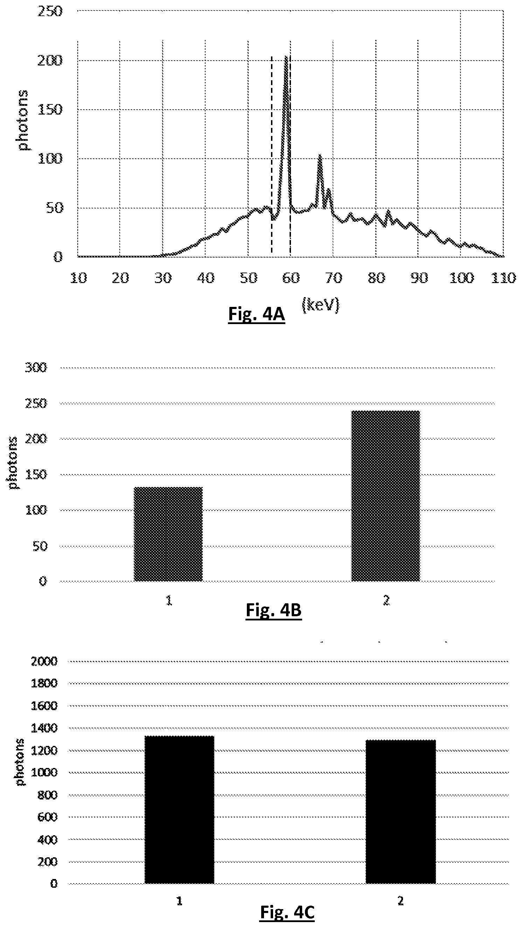

La figure 4A est un autre exemple, dans lequel l'objet 10 disposé entre la source d'irradiation 11 et le pixel $20_1$ est constitué d'une épaisseur de 5 cm de tissu et de 2 cm d'os. La figure 4B représente un spectre de regroupement obtenu en regroupant les canaux h du spectre de la figure 4A en se basant sur un seuil arbitraire égal à 60 keV. Les impulsions d'énergie inférieure à 60 keV sont regroupées dans un premier canal de regroupement k = 1 tandis que les impulsions d'énergie supérieure à 60 keV sont regroupées dans un deuxième canal de regroupement k = 2. On observe que les contenus de chaque canal ne sont pas identiques. La figure 4C montre le résultat d'un regroupement adaptatif, selon l'invention, en se basant sur un critère d'uniformité des canaux issus du regroupement. Ce critère a été appliqué au spectre représenté sur la figure 4A. L'analyse du spectre a déterminé que pour satisfaire au critère de regroupement, il faut considérer un seuil de regroupement de 65 keV. Le contenu des canaux h du spectre correspondant à une énergie inférieure à ce seuil sont regroupés dans un premier canal (k = 1), tandis que les canaux h supérieurs à ce seuil sont regroupés dans un deuxième canal (k = 2). On obtient ainsi un spectre de regroupement $Sp'_1$ , comportant deux canaux, dont chaque canal k a sensiblement la même valeur. Les seuils de 60 keV et de 65 keV sont matérialisés sur

la figure 4A par des lignes verticales en pointillés.

Les trois exemples qui précèdent, illustrent la variabilité de la valeur d'un seuil de regroupement permettant le regroupement de canaux, en fonction de la constitution de l'objet observé, en considérant un même critère de regroupement. Ils justifient l'approche adaptative sur laquelle se base l'invention. Dans ces exemples, le nombre de canaux de regroupement est de 2 (K = 2), mais l'invention s'applique naturellement un nombre de canaux de regroupement plus élevé.

Selon un mode de réalisation, le critère de regroupement est identique à celui du premier mode de réalisation, c'est-à-dire une répartition uniforme du contenu des canaux de regroupement k, mais la fonction de regroupement $f_k$, combinant les canaux regroupés h, est différente. Cette dernière est ici une somme pondérée du contenu $Sp_i(h)$ des canaux h situés dans une plage de regroupement $\Delta_k$, le terme de pondération étant dépendant d'une valeur d'énergie $E(h)$ à laquelle est associé chaque canal h du spectre mesuré.
Ainsi,

$$Sp'_i(k) = f_k\big(Sp_i(h)\big), h \in \Delta_k = \sum_{h \in \Delta_k} E(h)^{-3} Sp_i(h) = \sum_{h_{i,min}^k}^{h_{i,max}^k} E(h)^{-3} Sp_i(h) \quad (5)$$

Une telle pondération prend en compte le fait qu'en dessous d'une certaine énergie, le coefficient d'absorption d'un matériau varie en fonction de $E^{-3}$.

Selon un troisième mode de réalisation, le critère de regroupement dépend des pixels, en se basant sur un a priori. Cet a priori peut résulter d'une caractérisation préalable de l'objet, permettant d'obtenir une première information sur la nature des matériaux dans l'objet. Le critère de regroupement tient alors compte de cet a priori. Par exemple, en se basant sur l'a priori, certains pixels sont susceptibles de comporter une raie K caractéristique d'un matériau spécifique. Dans ces pixels, on peut prévoir des canaux de regroupement disposés de part et d'autre de la raie K. Dans les applications liées au diagnostic médical, on peut ainsi cibler les pixels correspondant aux parties d'un corps analysé dans lesquelles une présence d'un produit de contraste (par exemple Gadolinium ou Iode) est suspectée. Cela permet également d'appliquer des regroupements différents à des pixels correspondant à des tissus de différentes natures : par exemple, on applique un premier regroupement aux pixels correspondant aux tissus gras, et un deuxième critère de regroupement aux pixels correspondant aux tissus maigres, ou aux pixels correspondant à des os, ou encore du métal. L'invention peut être mise en oeuvre de façon itérative : au cours d'une première itération, on applique un critère de regroupement identique à chaque spectre acquis, ce qui permet de disposer d'un a priori sur la nature des matériaux composant l'objet. Lors d'itérations suivantes, le critère de regroupement appliqué à chaque pixel dépend de la nature des matériaux traversés par le rayonnement entre la source d'irradiation et le pixel.

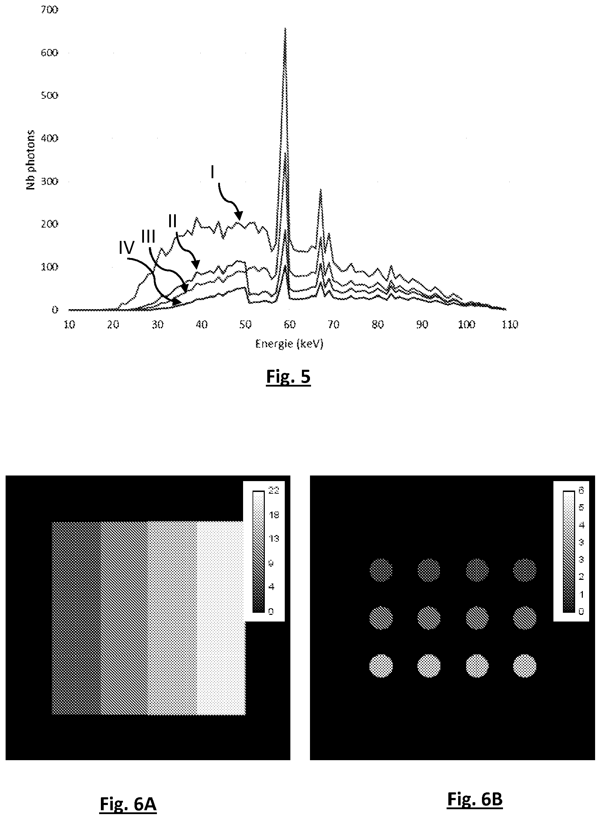

La figure 5 représente quatre spectres simulés en se basant sur une source d'irradiation et sur un détecteur tel que décrit en lien avec les exemples précédents. Les spectres représentés sur la figure 5 correspondent aux configurations suivantes :

- spectre I : objet formé de 5 cm de tissu ;
- spectre II : objet formé de 5 cm de tissu et de 1 cm de gadolinium ;
- spectre III : objet formé de 5 cm de tissu et de 1 cm d'os ;
- spectre IV : objet formé de 5 cm de tissu et de 1 cm d'os et de 1 cm de gadolinium.

On observe que la présence de gadolinium entraîne une discontinuité de part et d'autre de l'énergie 50 keV. Ainsi, le procédé peut comporter les étapes suivantes :

- au cours d'une première itération, formation de canaux de regroupement de part et d'autre de 50 keV, par exemple selon deux canaux correspondant à des énergies [45 keV - 50 keV] et [51 keV et 56 keV] ;
- comparaison des contenus des canaux ainsi regroupés ;
- en cas de différence significative du contenu, l'objet observé contient du gadolinium. Le regroupement peut être réalisé selon un critère de regroupement déterminé, tout en imposant deux canaux de regroupement de part et d'autre de 50 keV. Par exemple un premier canal de regroupement [10 keV - 50 keV], un deuxième canal de regroupement [51 keV - 75 keV], et au moins un troisième canal de regroupement au-delà de 75 keV. Les canaux au-delà de 75 keV peuvent faire l'objet d'un regroupement selon un critère de regroupement, par exemple un critère d'uniformité.
- lorsque la comparaison réalisée n'aboutit pas à une différence significative entre les contenus des canaux à [45 keV - 50 keV] et [51 keV et 56 keV], le spectre mesuré peut faire l'objet d'un regroupement selon un critère de regroupement, par exemple un critère d'uniformité.

Ainsi, le spectre obtenu fait l'objet d'un regroupement itératif, la présence d'un matériau particulier étant vérifiée au cours d'une première itération, la deuxième itération tenant compte des résultats de la première itération.

Dans les modes de réalisation précédemment décrits, la plage de regroupement est composée de canaux adjacents, mais une plage de regroupement peut comporter des canaux non adjacents les uns des autres.

Chaque spectre regroupé $Sp'_i$ représente une atténuation $Att'_i$ du rayonnement électromagnétique ionisant 12 par l'objet. L'atténuation $Att'_i$ peut ensuite être décomposée dans une base $B^K$, cette dernière étant formée par $N$ vecteurs de base $V_n^K$, de dimension $K$, de telle sorte que : $Att'_i \approx \sum_{n=1}^{n=N} \alpha_{i,n} V_n^K$ $Att'_i$ où $\alpha_{i,n}$ désigne une coordonnée de l'atténuation $Att'_i$ dans la base. L'atténuation $Att'_i$ correspondant au spectre regroupé $Sp'_i$ est un vecteur de même dimension que le spectre regroupé $Sp'_i$. La détermination des coordonnées de l'atténuation dans la base peut être obtenue en utilisant une méthode d'estimation statistique, de type maximum de vraisemblance, ou par une méthode paramétrique de type polynomiale. Ces méthodes permettent d'estimer les coordonnées $\alpha_{i,n}$ en fonction des contenus des canaux du spectre regroupé $Sp'_i$. Le symbole $\approx$ désigne le fait que la décomposition de l'atténuation dans la base est réalisée par estimation, du fait que la relation entre le spectre regroupé et l'atténuation ne soit pas linéaire. Chaque vecteur $V_n^K$ de la base $B^K$ est de la même dimension que le nombre de canaux K du spectre de regroupement $Sp'_i$. La décomposition d'un spectre selon une base de coefficients d'atténuation est décrite dans la publication Rebuffel "Dual-energy X-ray imaging : benefits and limits" Insight Vol 49 No 10, october 2007 ou dans la publication Alvarez R "Near optimal energy selective x-ray imaging system performance with simple detectors", Med. Phys. 37 (2), February 2010.

Chaque vecteur de base $V_n^K$ peut notamment être représentatif d'un spectre obtenu en disposant un matériau de calibration $calib_n$ connu à la place de l'objet à examiner, et faisant l'objet d'un regroupement similaire au regroupement ayant abouti au spectre regroupé $Sp'_i$. Par regroupement similaire, on entend un regroupement effectué selon des mêmes plages de regroupement $\Delta_k$ et selon une même fonction de regroupement $f_k$ que le spectre regroupé $Sp'_i$. Dans ce cas, une coordonnée $\alpha_n$ représente une quantité équivalente du matériau de calibration $calib_n$ dans l'objet analysé.

Par exemple, on peut disposer de deux matériaux de calibrations $calib_1$ et $calib_2$. Dans ce cas, on mesure successivement, à l'aide du détecteur $20_i$, deux spectres de calibration $Sp_{i,calib1}$ et $Sp_{i,calib2}$, chaque spectre de calibration étant défini selon $H$ canaux. Après l'acquisition d'un spectre $Sp_i$ d'un objet à analyser, le spectre mesuré fait l'objet d'un regroupement pour former le spectre de regroupement $Sp'_i$. On peut alors obtenir les coordonnées correspondant à une atténuation correspondant à ce spectre de regroupement dans une base dont chaque vecteur de base est obtenu en appliquant le même regroupement correspondant aux spectres de calibration $Sp_{i,calib1}$ et $Sp_{i,calib2}$, de façon à former deux spectres de calibration regroupés $Sp'_{i,calib1}$ et $Sp'_{i,calib2}$, ces derniers permettant respectivement la formation des vecteurs de base $V_1^K$ et $V_2^K$. La décomposition de l'atténuation correspondant au spectre regroupé $Sp'_i$ dans la base est telle que : $Att'_i \approx \alpha_1 V_1^K + \alpha_2 V_2^K$, $\alpha_1$ et $\alpha_2$ représentant respectivement une proportion équivalente de chaque matériau de calibration dans le matériau à analyser. Par même regroupement, on entend un regroupement effectué selon la même plage de regroupement $\Delta_k$ et en appliquant la même fonction de regroupement $f_k$.

Chaque spectre de calibration peut être normalisé par un spectre $Sp_{i,0}$, dit spectre de la source, du rayonnement 12 émis par la source 11 sans objet disposé entre la source et le détecteur $20_i$. Le spectre $Sp_i$ d'un objet à analyser peut alors être également normalisé par le spectre de la source $Sp_{i,0}$, avant de faire l'objet d'un regroupement, formant le spectre de regroupement $Sp'_i$. La décomposition du spectre, ou plus exactement de l'atténuation correspondant à ce spectre, dans la base est telle que $Att'_i \approx \alpha_1 V_1^K + \alpha_2 V_2^K$, où $V_1^K$ et $V_2^K$ sont obtenus après normalisation respective des spectres de calibration $Sp_{i,calib1}$ et $Sp_{i,calib1}$ par $Sp_{i,0}$, puis regroupement des spectres de calibration ainsi normalisés. Les coordonnées $\alpha_1$ et $\alpha_2$ représentent respectivement une épaisseur équivalente de chaque matériau de calibration dans le matériau à analyser. De façon connue, l'atténuation peut correspondre à l'opposé du logarithme des spectres normalisés.

Un vecteur de base peut également être représentatif d'un phénomène physique, par exemple une discontinuité spectrale. Cela permet de prendre en compte des discontinuités de type absorption K d'un matériau irradié par la source d'irradiation 11, en particulier lorsque la source d'irradiation dispose d'un collimateur. Cela permet également la prise en compte de discontinuités d'absorption dans un spectre, de type raies K.

Un vecteur de base peut également être représentatif d'un type d'atténuation dans l'objet analysé. Par exemple, une base peut comporter un premier vecteur de base $V_1^K$ représentatif d'une section efficace de l'absorption photoélectrique d'un matériau représentatif de l'objet à analyser, et un deuxième vecteur de base $V_2^K$ représentatif d'une section efficace de la diffusion Compton dans ledit matériau. Dans ce cas, chaque coordonnée $\alpha_1$, $\alpha_2$ représente alors une proportion relative de chaque type d'atténuation (photoélectrique ou Compton) dans le spectre analysé.

D'une façon générale, un vecteur de base est une fonction spectrale définie selon les mêmes canaux $k$ que le spectre regroupé $Sp'_i$. L'atténuation $Att'_i$ correspondant au spectre regroupé peut alors être décomposée selon la base formée par les vecteurs de base. Chaque vecteur de base peut être obtenu à partir d'une fonction spectrale initialement établie selon un nombre important de canaux, par exemple en autant de canaux que le spectre mesuré $Sp_i$, puis ayant fait l'objet d'un regroupement dans des canaux correspondant respectivement aux énergies de chaque plage de regroupement $\Delta_k$. Par exemple, un vecteur de base peut être défini par une fonction spectrale définie sur autant de canaux que le spectre mesuré, après regroupement de la fonction spectrale selon la même plage de regroupement $\Delta_k$ et la même fonction de regroupement $f_k$ que celles appliquées au spectre mesuré.

Comme précédemment indiqué, deux pixels élémentaires $i$, $j$ différents placés en regard d'un même objet 10, acquièrent respectivement deux spectres élémentaires $Sp_i$, $Sp_j$, ces derniers faisant ensuite l'objet d'un regroupement de façon à former respectivement deux spectres de regroupement $Sp'_i$, $Sp'_j$. On obtient ensuite les coordonnées de l'atténuation correspondant à chaque spectre de regroupement $Sp'_i$, $Sp'_j$ dans une base formée à partir de vecteurs de base. Les vecteurs de base utilisés sont représentatifs des mêmes matériaux de calibration. Cependant, les coordonnées du spectre $Sp'_i$ peuvent être obtenues selon une base $B_i^K$, formée de $N$ vecteurs $V_{n,i}^K$, tandis que les coordonnées du spectre $Sp'_i$ peuvent être obtenues selon une base $B_j^K$, formée de $N$ vecteurs $V_{n,j}^K$. Les bases $B_i^K$ et $B_j^K$ dépendent respectivement du regroupement appliqué aux spectres $Sp_i$ et $Sp_j$.

Les bases dans lesquelles on détermine les coordonnées des atténuations correspondant aux spectres de regroupement, pour un même objet 10, peuvent avoir la même dimension, c'est-à-dire le même nombre K de vecteurs de base. Deux spectres de regroupement représentatifs d'un même objet peuvent être décomposés selon des bases différentes, ces dernières dépendant de la fonction de regroupement $f_k$ et des plages de regroupement $\Delta_k$. Autrement dit, le regroupement appliqué à chaque spectre détecté $Sp_i$, c'est-à-dire les plages de regroupement $\Delta_k$ et la fonction de regroupement $f_k$, conditionne la base $B^K$ dans laquelle le spectre de regroupement $Sp'_i$ est décomposé. Toutefois, comme chaque base $B^K$ peut comporter un même nombre $N$ de vecteurs, chaque spectre de regroupement peut être caractérisé par un même nombre de coordonnées $\alpha_n$.

Chaque coordonnée $\alpha_{i,n}$ représente une proportion de chaque vecteur de base $V_n^K$ dans l'atténuation correspondant au spectre regroupé $Sp'_i$, et le spectre regroupé associé à chaque pixel $20_i$ est caractérisé par le même nombre $N$ de coordonnées $\alpha_{i,n}$, cela quel que soit le regroupement appliqué à chaque pixel i.

Les différentes étapes d'un exemple de procédé de traitement d'un spectre sont illustrées en lien avec la figure 1B. L'étape 100 correspond à l'obtention d'un spectre $Sp_i$ par un détecteur $20_i$. Au cours d'une étape 110, on définit, à partir du spectre mesuré $Sp_i$, des plages de regroupement $\Delta_k$, satisfaisant à un critère de regroupement C (par exemple une répartition uniforme dans les canaux de regroupement), la fonction de regroupement $f_k$ étant une donnée d'entrée, au même titre que le critère C et que le nombre de canaux K du spectre de regroupement. Au cours d'une étape 120, on constitue un spectre de regroupement $Sp'_i$ en prenant en compte les plages de regroupement $\Delta_k$ déterminées lors de l'étape 110 sachant le critère de regroupement C et la fonction de regroupement $f_k$.

Les plages de regroupement $\Delta_k$ conditionnent également la sélection d'une base $B_i^K$ dans laquelle l'atténuation correspondant au spectre de regroupement est décomposée (étape 130), l'obtention des coordonnées de l'atténuation dans la base ainsi sélectionnée faisant l'objet de l'étape 140. On obtient alors un ensemble de $N$ coordonnées $\alpha_{i,n}$ de l'atténuation correspondant au spectre $Sp'_i$ dans la base $B_i^K$, $N$ représentant le nombre de vecteurs de la base, $N$ étant commun à chaque base $B_i^K$, de telle sorte qu'à chaque spectre $Sp'_i$ est associé un même ensemble de $N$ coordonnées $\alpha_{i,n}$.

Les étapes 100 à 140 peuvent être réitérées pour différents pixel $20i$ d'un détecteur et/ou en déplaçant le détecteur par rapport à l'objet. De cette façon, on obtient autant de coordonnées $\alpha_{i,n}$, l'indice i représentant une position respective d'un détecteur par rapport à l'objet examiné. L'objet analysé peut être décomposé en mailles élémentaires tridimensionnelles, ou voxels r. L'étape 150 est une étape de caractérisation de l'objet à partir des coordonnées établies dans l'étape 140. Par exemple, une reconstruction tomographique peut être réalisée, visant à caractériser une atténuation $\mu(r)$ de chaque voxel. La reconstruction est mise en oeuvre selon des algorithmes de reconstruction tomographique connus de l'homme du métier, visant à inverser un modèle direct de type :

$$S = M\,A$$

où :

- 5 est un vecteur ($I \times N$, 1), dont chaque terme représente une coordonnée $\alpha_{i,n}$ déterminée au cours de chaque étape 140, 1 représentant le nombre de spectres $Sp_i$ considérés. La dimension du vecteur 5 est $I \times N$, c'est-à-dire le nombre de spectres détectés $Sp_i$ multiplié par le nombre de coordonnées $\alpha_{i,n}$ déterminées pour chaque spectre, après regroupement de ce dernier.
- M est une matrice de projection modélisée, de dimension ($I \times N$, $R$), $R$ représente le nombre de voxels.
- A est un vecteur ($R$, 1) dont chaque terme représente une caractéristique de l'objet, par exemple un coefficient d'atténuation $\mu(r)$ d'un voxel de l'objet; $A$ peut également représenter une autre caractéristique de l'objet, par exemple une estimation de la nature du matériau composant cet objet.

Selon un mode de réalisation, durant une première phase, le procédé est mis en oeuvre en regroupant chaque spectre mesuré selon un critère prédéterminé. Les spectres regroupés sont alors décomposés selon une même base. L'objet est décomposé en mailles élémentaires r. A partir de chaque coordonnée issue de la décomposition de l'atténuation correspondant aux spectres regroupés, on estime une caractéristique de chaque maille élémentaire de l'objet, par exemple un coefficient d'atténuation ou la nature du matériau composant chaque maille. A partir de cette reconstruction, on détermine un critère de regroupement C. Ce critère est par exemple un critère de séparation entre des bandes d'énergies définies grâce à la reconstruction. Le procédé se poursuit par :

- un regroupement de chaque spectre mesuré par le critère de regroupement déterminé suite à la reconstruction précédemment réalisée ;
- une décomposition de l'atténuation correspondant à chaque spectre ainsi regroupé dans une base ;
- une reconstruction de l'objet en fonction des coordonnées obtenues lors de la décomposition de l'atténuation dans la base.

L'invention peut également être mise en oeuvre en géométrie bidimensionnelle, c'est-à-dire en mode radiographie, en discrétisant l'objet en éléments de surface, ou pixels, le vecteur A obtenu représentant l'atténuation de chaque pixel.

L'invention a été mise en oeuvre de façon expérimentale dans une application de radiologie. On a simulé des spectres mesurés en disposant un objet composite 10, formé par du tissu et des os, entre la source d'irradiation 11 préalablement décrite et un détecteur 20 pixellisé, chaque pixel $20_i$ étant un pavé de CdZnTe de dimension 1 mm × 1 mm et d'épaisseur 500 μm. Le spectre plein flux de la source d'irradiation 11 est celui représenté sur la figure 2A. Les figures 6A et 6B montrent les composants de l'objet composite simulé. Cet objet est formé de quatre bandes de tissu, de longueur 20 cm et de largeur 5cm, et d'épaisseur respectivement égales à 5 cm, 10 cm, 15 cm et 20 cm. Ces bandes de tissu sont représentées sur la figure 6A, le niveau de gris indiquant leur épaisseur. L'objet comporte également des cylindres d'os, de diamètre 4 cm, et d'épaisseurs égales à 1 cm, 2 cm et 4 cm. Ces cylindres sont représentés sur la figure 6B, le niveau de gris indiquant leur épaisseur.

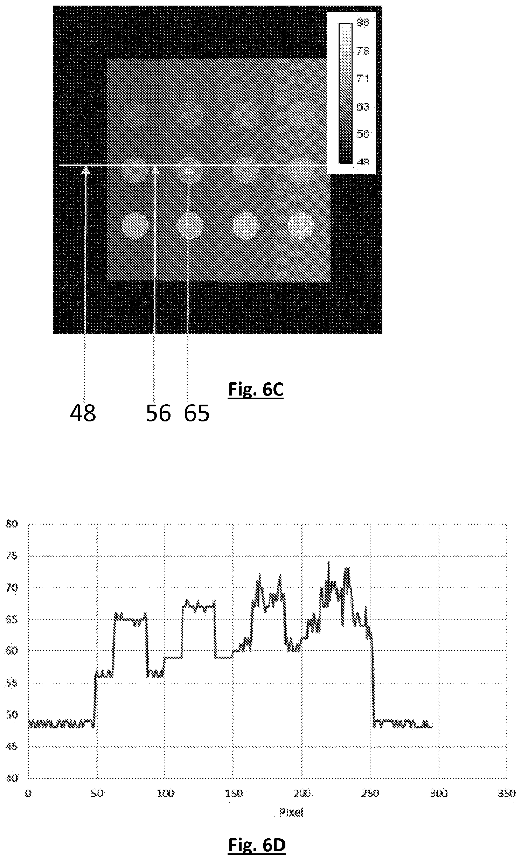

Les cylindres d'os représentés sur la figure 6B ont été déposés sur les bandes de tissu représentées sur la figure 6A. On a ensuite acquis différents spectres $Sp_i$, par chaque pixel $20_i$, correspondant aux différentes parties de l'objet composite ainsi constitué. Chaque spectre a fait l'objet d'un regroupement pour former un spectre de regroupement $Sp_i'$ dont chaque canal k a sensiblement la même valeur $Sp_i'(k)$. Dans cet exemple, chaque spectre de regroupement comporte 2 canaux, définis de part et d'autre d'un seuil, dit seuil de regroupement. La figure 6C représente une distribution spatiale d'un tel seuil de regroupement, le niveau de gris représentant la valeur du seuil de regroupement. On observe que la valeur du seuil de regroupement varie en fonction des différentes parties de l'objet. La figure 6D représente un profil montrant l'évolution du seuil de regroupement selon une ligne horizontale en pointillés représentés sur la figure 6C. Cette figure permet d'apprécier la variabilité du seuil en fonction de la composition de l'objet. On a représenté, sur la figure 6C, quelques valeurs particulières du seuil.

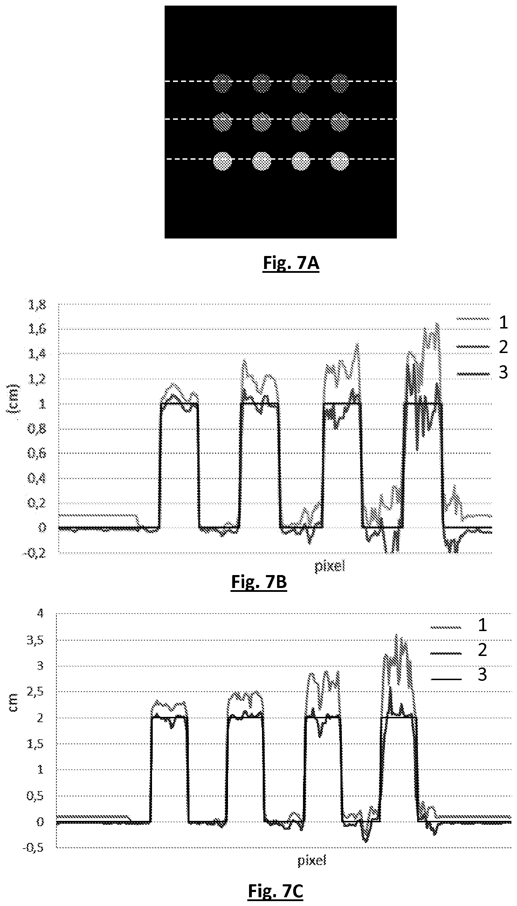

La figure 7A représente les différentes épaisseurs d'os formant le tissu composite. A partir de chaque spectre $Sp_i$ acquis par chaque pixel $20_i$, on a estimé une épaisseur d'os en considérant un spectre de regroupement $Sp_i'$ formé :

- soit sur la base d'un seuil de regroupement fixe, égal à 60 keV
- soit sur la base d'un seuil de regroupement tel que représenté sur la figure 6C.

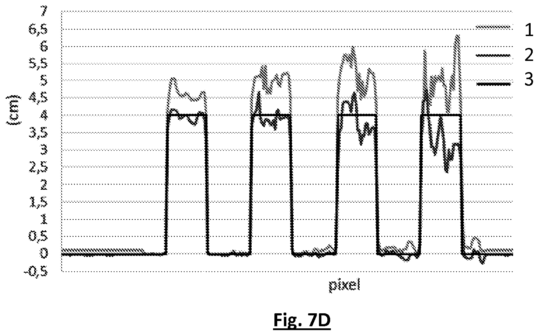

Les figures 7B, 7C et 7D représentent un profil de l'épaisseur estimée, le long des lignes horizontales représentées sur la figure 7A, respectivement du haut vers le bas. Sur chaque figure, on a représenté :

- un profil obtenu en mettant en oeuvre un seuil de regroupement fixe (profil 1), ce qui représente l'art antérieur.
- un profil obtenu en mettant en oeuvre un seuil de regroupement tel que représenté sur la figure 6C (profil 2);
- un profil correspondant à la réalité (profil 3)

On observe que sur chaque profil, les estimations d'épaisseurs mettant en oeuvre l'invention (profils 2) aboutissent à une erreur d'estimation moindre que les estimations d'épaisseur obtenues sur la base d'un spectre de regroupement obtenu sur la base d'un seuil de regroupement fixe. L'invention permet d'améliorer la qualité de l'estimation quant à la nature de l'objet observé.

## Revendications

**1.** Procédé d'analyse d'un objet (10) comportant les étapes suivantes :

a) irradiation de l'objet à l'aide d'une source de rayonnement (11), ladite source émettant un rayonnement électromagnétique ionisant (12) se propageant vers l'objet ;

b) obtention d'un spectre ($Sp_i$) d'un rayonnement transmis (14) par l'objet à l'aide d'un détecteur de rayonnement ($20_i$) appartenant à un dispositif de détection (20), le spectre obtenu comportant plusieurs canaux élémentaires (h), chaque canal élémentaire étant associé à une bande d'énergie ($\delta E(h)$);

c) à partir du spectre obtenu ($Sp_i$), formation d'un spectre de regroupement ($Sp'_i$) constitué de plusieurs canaux (k), dits canaux de regroupement, au moins un canal de regroupement étant obtenu en regroupant, selon un critère de regroupement prédéterminé (C), plusieurs canaux élémentaires (h), la valeur du spectre de regroupement ($Sp_i'(k)$) en chaque canal de regroupement (k) étant fonction de la valeur du spectre ($Sp_i(h)$), obtenu lors de l'étape b), en chaque canal élémentaire (h) ainsi regroupé ;

d) sélection d'une base ( $B_i^K$ ) comportant des vecteurs de base ( $V_n^K$ ), dont chaque terme ( $V_n^K$ ) représente une atténuation du rayonnement électromagnétique ionisant dans une plage d'énergie ($\Delta E(k)$) associée à chaque canal de regroupement ($k$);

e) obtention de coordonnées ($\alpha_{i,n}$) d'une atténuation, correspondant au spectre de regroupement ($Sp'$) formé lors de l'étape c), dans la base ( $B_i^K$ ) sélectionnée lors de l'étape d) ;

f) estimation d'une caractéristique de l'objet en fonction des coordonnées ($\alpha_{i,n}$) obtenues lors de l'étape e) ;

le procédé étant **caractérisé en ce que** le dispositif de détection (20) comporte une pluralité de détecteurs de rayonnements ($20_i$, $20_j$) adjacents les uns des autres, les étapes b) à e) étant mises en oeuvre pour chaque détecteur de rayonnement, de telle sorte que :

- chaque étape c) est mise en oeuvre en considérant un même critère de regroupement (C) ;
- lors de l'étape e), l'atténuation correspondant à au moins deux spectres de regroupement ($Sp'_i$, $Sp'_j$) respectivement obtenus par deux détecteurs différents, est décomposée selon un même nombre de coordonnées et selon deux bases différentes ( $B_i^K, B_j^K$ );
- lors de l'étape f), l'estimation d'une caractéristique de l'objet est réalisée à partir des coordonnées obtenues dans chaque étape e).

2. Procédé selon la revendication 1, dans lequel l'étape c) comporte, pour chaque canal de regroupement (k), les sous-étapes suivantes :

- en fonction du critère de regroupement (C), une association d'une plage de regroupement ($\Delta_k$), définissant les canaux élémentaires (h) regroupés dans le canal de regroupement ;
- la prise en compte d'une fonction de regroupement ($f_k$), de telle sorte que la valeur du spectre de regroupement ( $Sp'_i(k)$ ) au canal de regroupement ($k$) soit déterminé en appliquant la fonction de regroupement ($f_k$) à la valeur du spectre ($Sp_i(h)$), obtenu lors de l'étape b), dans chaque canal élémentaire (h) ainsi regroupé.

3. Procédé selon l'une quelconque des revendications précédentes, dans lequel lors de l'étape c), la valeur attribuée à chaque canal de regroupement (Sp'(k)) est une somme ou une somme pondérée de la valeur du spectre ($Sp(h)$), obtenu lors de l'étape b), en chaque canal élémentaire regroupé.

4. Procédé selon la revendication 3, dans lequel la valeur attribuée à chaque canal de regroupement ($Sp'(k)$) est une somme pondérée dans laquelle le contenu de chaque canal élémentaire est affecté d'un coefficient de pondération dépendant de la bande d'énergie ($E(h)$) associée audit canal élémentaire ($Sp(h)$).

5. Procédé selon l'une quelconque des revendications précédentes, dans lequel lors de l'étape c), le critère de regroupement (C) est un critère d'uniformité, selon lequel les valeurs respectives de chaque canal de regroupement ($Sp'(k)$) composant le spectre de regroupement ($Sp'$) sont égales, à une tolérance prédéterminée près.

6. Procédé selon l'une quelconque des revendications précédentes, dans lequel lors de l'étape d), chaque terme des vecteurs de base ( $V_n^K$ ) est défini pour chaque canal de regroupement et correspond, dans la plage d'énergie ($\Delta E(k)$) associée audit canal de regroupement (/c),

- soit à une atténuation d'un matériau de calibration ($calib_n$) ;
- soit à une proportion relative d'atténuation photoélectrique ou de diffusion Compton dans ladite plage d'énergie;
- soit à une discontinuité spectrale.

7. Procédé selon l'une quelconque des revendications précédentes, comportant une répétition des étapes b) à e), de telle sorte que

- chaque étape b), comporte une obtention d'un spectre ($Sp_i$) dans une position différente du dispositif de détection (20) relativement à l'objet ;

- chaque étape c) est mise en oeuvre en considérant un même critère (C) ;
- lors de chaque étape e), l'atténuation correspondant au spectre de regroupement (*Sp'$_i$*) est associée à un même nombre de coordonnées ;
- lors de l'étape f), l'estimation d'une caractéristique de l'objet est réalisée à partir des coordonnées obtenues dans chaque étape e).

**8.** Procédé selon la revendication 7, dans lequel l'étape f) comporte :

- une discrétisation de l'objet (10) en mailles bidimensionnelles (r) ou tridimensionnelles ;
- une estimation d'une atténuation dans chaque maille ou de la nature de matériau composant chaque maille à partir des coordonnées ($\alpha_{i,n}$) obtenues lors de chaque étape e).

**9.** Procédé selon l'une quelconque des revendications précédentes, dans lequel lors de l'étape c), le nombre de canaux du spectre de regroupement est égal à 2, de telle sorte que la formation du spectre de regroupement comporte une détermination d'un seuil, dit seuil de regroupement, de telle sorte que le premier canal du spectre de regroupement rassemble les canaux élémentaires correspondant à une énergie inférieure au seuil de regroupement, et que le deuxième canal du spectre de regroupement rassemble les canaux élémentaires correspondant à une énergie supérieure au seuil de regroupement.

**10.** Dispositif de détection d'un rayonnement ionisant comportant :

- une pluralité de détecteurs de rayonnement (20i, 20j) adjacents les uns des autres, chacun étant apte à interagir avec un rayonnement électromagnétique ionisant, chaque détecteur pixel comportant un circuit électronique apte à générer un signal dont l'amplitude dépend d'une énergie déposée par le rayonnement interagissant dans ledit détecteur ;
- un circuit dit de spectrométrie, permettant d'obtenir une répartition de signaux générés par le détecteur de rayonnement en fonction de leur amplitude, de façon à former un spectre représentatif de ladite répartition ;
- une unité de traitement (22) configuré pour mettre en oeuvre les étapes c) à f) d'un procédé selon l'une quelconque des revendications 1 à 9 à l'aide des spectres formés par le circuit de spectrométrie.

**Patentansprüche**

**1.** Verfahren zur Analyse eines Objekts (10), das die folgenden Schritte aufweist:

a) Bestrahlung des Objekts mit Hilfe einer Strahlungsquelle (11), wobei die Quelle eine ionisierende elektromagnetische Strahlung (12) emittiert, die sich zum Objekt ausbreitet;
b) Erhalt eines Spektrums (Sp$_i$) einer vom Objekt übertragenen Strahlung (14) mit Hilfe eines zu einer Erfassungsvorrichtung (20) gehörenden Strahlungsdetektors (20i), wobei das erhaltene Spektrum mehrere Elementarkanäle (h) aufweist, wobei jeder Elementarkanal einem Energieband ($\delta E(h)$) zugeordnet ist;
c) ausgehend vom erhaltenen Spektrum (Sp$_i$) Bildung eines Gruppierungsspektrums (Sp'i), das aus mehreren Kanälen (k) besteht, Gruppierungskanäle genannt, wobei mindestens ein Gruppierungskanal erhalten wird durch Gruppieren, gemäß einem vorbestimmten Gruppierungskriterium (C), mehrerer Elementarkanäle (h), wobei der Wert des Gruppierungsspektrums ( $Sp_i'(k)$ ) in jedem Gruppierungskanal (k) vom Wert des im Schritt b) erhaltenen Spektrums (Spi(h)) in jedem so gruppierten Elementarkanal (h) abhängt;

d) Auswahl einer Basis (Bf), die Basisvektoren ( $V_n^K$ ) aufweist, von denen jeder Term ( $'V_n^K$ ) eine Dämpfung der ionisierenden elektromagnetischen Strahlung in einem Energiebereich ($\Delta E(k)$) darstellt, der jedem Gruppierungskanal (k) zugeordnet ist;
e) Erhalt von Koordinaten ($\alpha_{i,n}$) einer Dämpfung, entsprechend dem im Schritt c) gebildeten Gruppierungsspektrum (Sp'), in der im Schritt d) ausgewählten Basis ( $B_i^K$ ) ;
f) Schätzung einer Charakteristik des Objekts abhängig von den im Schritt e) erhaltenen Koordinaten ($\alpha$i,n);

wobei das Verfahren **dadurch gekennzeichnet ist, dass** die Erfassungsvorrichtung (20) eine Vielzahl von einander benachbarten Strahlungsdetektoren (20$_i$, 20$_j$) aufweist, wobei die Schritte b) bis e) für jeden Strahlungsdetektor durchgeführt werden, so dass :

- jeder Schritt c) unter Berücksichtigung eines gleichen Gruppierungskriteriums (C) durchgeführt wird;
- im Schritt e) die Dämpfung, die mindestens zwei Gruppierungsspektren (Sp'i, Sp'j) entspricht, die von zwei verschiedenen Detektoren erhalten werden, gemäß einer gleichen Anzahl von Koordinaten und gemäß zwei verschiedenen Basen ( $B_i^K, B_j^K$ ) zerlegt wird;
- im Schritt f) die Schätzung einer Charakteristik des Objekts ausgehend von den in jedem Schritt e) erhaltenen Koordinaten durchgeführt wird.

2. Verfahren nach Anspruch 1, wobei der Schritt c) für jeden Gruppierungskanal (k) die folgenden Teilschritte aufweist:

   - abhängig vom Gruppierungskriterium (C) eine Zuordnung eines Gruppierungsbereichs ($\Delta_k$), der die im Gruppierungskanal gruppierten Elementarkanäle (h) definiert;
   - die Berücksichtigung einer Gruppierungsfunktion ($f_k$), so dass der Wert des Gruppierungsspektrums ( $Sp'_k(k)$ ) im Gruppierungskanal (k) bestimmt wird, indem die Gruppierungsfunktion ($f_k$) an den Wert des im Schritt b) erhaltenen Spektrums (Spi(h)) in jedem so gruppierten Elementarkanal (h) angewendet wird.

3. Verfahren nach einem der vorhergehenden Ansprüche, wobei im Schritt c) der jedem Gruppierungskanal (Sp'(k)) zugeteilte Wert eine Summe oder eine gewichtete Summe des Werts des im Schritt b) erhaltenen Spektrums (Sp(h)) in jedem gruppierten Elementarkanal ist.

4. Verfahren nach Anspruch 3, wobei der jedem Gruppierungskanal (Sp'(k)) zugeteilte Wert eine gewichtete Summe ist, in der auf den Inhalt jedes Elementarkanals ein Gewichtungskoeffizient angewendet wird, der vom dem Elementarkanal (Sp(h)) zugeordneten Energieband (E(h)) abhängt.

5. Verfahren nach einem der vorhergehenden Ansprüche, wobei im Schritt c) das Gruppierungskriterium (C) ein Gleichförmigkeitskriterium ist, gemäß dem die Werte jedes das Gruppierungsspektrum (Sp') bildenden Gruppierungskanals (Sp'(k)) bis auf eine vorbestimmte Toleranz gleich sind.

6. Verfahren nach einem der vorhergehenden Ansprüche, wobei im Schritt d) jeder Term der Basisvektoren ( $V_n^K$ ) für jeden Gruppierungskanal definiert wird und im dem Gruppierungskanal (k) zugeordneten Energiebereich ($\Delta E(k)$) entspricht,

   - entweder einer Dämpfung eines Kalibrierungsmaterials ($calib_n$) ;
   - oder einem relativen Anteil photoelektrischer Dämpfung oder Compton-Streuung im Energiebereich;
   - oder einer spektralen Diskontinuität.

7. Verfahren nach einem der vorhergehenden Ansprüche, das eine Wiederholung der Schritte b) bis e) aufweist, so dass

   - jeder Schritt b) einen Erhalt eines Spektrums ($Sp_i$) in einer anderen Position der Erfassungsvorrichtung (20) bezüglich des Objekts aufweist;
   - jeder Schritt c) unter Beachtung eines gleichen Kriteriums (C) durchgeführt wird;
   - in jedem Schritt e) die Dämpfung entsprechend dem Gruppierungsspektrum ($Sp'_i$) einer gleichen Anzahl von Koordinaten zugeordnet ist;
   - im Schritt f) die Schätzung einer Charakteristik des Objekts ausgehend von den in jedem Schritt e) erhaltenen Koordinaten durchgeführt wird.

8. Verfahren nach Anspruch 7, wobei der Schritt f) aufweist:

   - eine Diskretisierung des Objekts (10) in zwei- oder dreidimensionale Maschen (r);
   - eine Schätzung einer Dämpfung in jeder Masche oder der Beschaffenheit eines jede Masche bildenden Materials ausgehend von den in jedem Schritt e) erhaltenen Koordinaten ($\alpha_{i,n}$).

9. Verfahren nach einem der vorhergehenden Ansprüche, wobei im Schritt c) die Anzahl von Kanälen des Gruppierungsspektrums gleich 2 ist, so dass die Bildung des Gruppierungsspektrums eine Bestimmung einer Schwelle, Gruppierungsschwelle genannt, aufweist, so dass der erste Kanal des Gruppierungsspektrums die Elementarkanäle entsprechend einer niedrigeren Energie als die Gruppierungsschwelle zusammenfasst, und dass der zweite Kanal des Gruppierungsspektrums die Elementarkanäle entsprechend einer höheren Energie als die Gruppierungsschwelle zusammenfasst.

10. Erfassungsvorrichtung einer ionisierenden Strahlung, die aufweist:

- eine Vielzahl von aneinandergrenzenden Strahlungsdetektoren ($20_i$, $20_j$), die je fähig sind, mit einer ionisierenden elektromagnetischen Strahlung zu interagieren, wobei jeder Detektor eine elektronische Schaltung aufweist, die fähig ist, ein Signal zu erzeugen, dessen Amplitude von einer durch die im Detektor interagierende Strahlung deponierten Energie abhängt;
- eine so genannte Spektrometrie-Schaltung, die es ermöglicht, eine Verteilung von vom Strahlungsdetektor erzeugten Signalen abhängig von ihrer Amplitude zu erhalten, um ein für die Verteilung repräsentatives Spektrum zu bilden;
- eine Verarbeitungseinheit (22), die konfiguriert ist, die Schritte c) bis f) eines Verfahrens nach einem der Ansprüche 1 bis 9 mit Hilfe der von der Spektrometrie-Schaltung gebildeten Spektren durchzuführen.

**Claims**

1. Method for analysing an object (10), comprising the following steps:

a) irradiating the object using a radiation source (11), said source emitting ionizing electromagnetic radiation (12) that propagates to the object;
b) obtaining a spectrum ($Sp_i$) of radiation (14) transmitted by the object using a radiation detector ($20_i$) belonging to a detecting device (20), the obtained spectrum comprising a plurality of elementary channels (h), each elementary channel being associated with one energy band ($\delta E(h)$);
c) based on the obtained spectrum ($Sp_i$), forming a binned spectrum ($Sp'_i$) made up of a plurality of channels (k), called binning channels, at least one binning channel being obtained by binning, according to a predetermined binning criterion (C), a plurality of elementary channels (h), the value of the binned spectrum ($Sp'_i(k)$) in each binning channel (k) being dependent on the value of the spectrum ($Sp_i(h)$) obtained in step b), in each elementary channel (h) thus binned;
d) selecting a basis ( $B_i^K$ ) comprising basis vectors ( $V_n^K$ ) each term ( $V_n^K$ ) of which represents an attenuation of the ionizing electromagnetic radiation in an energy range ($\Delta E(k)$) associated with each binning channel (k);
e) obtaining coordinates ($\alpha_{i,n}$) of an attenuation, corresponding to the binned spectrum (Sp') formed in step c), in the basis ( $B_i^K$ ) selected in step d);
f) estimating a characteristic of the object depending on the coordinates ($\alpha_{i,n}$) obtained in step e);

the method being **characterized in that** the detecting device (20) comprises a plurality of radiation detectors ($20_i$, $20_j$) that are adjacent to one another, steps b) to e) being implemented for each radiation detector, such that:

- each step c) is implemented considering the same binning criterion (C);
- in step e), the attenuation corresponding to at least two binned spectra ($Sp'_i$, $Sp'_j$) obtained by two different detectors, respectively, is decomposed into the same number of coordinates in two different bases ( $B_i^K$, $B_j^K$ );
- in step f), a characteristic of the object is estimated based on the coordinates obtained in each step e).

2. Method according to Claim 1, wherein step c) comprises, for each binning channel (k), the following sub-steps:

- depending on the binning criterion (C), associating a binning range ($\Delta_k$), defining the elementary channels (h) binned in the binning channel;
- taking into account a binning function ($f_k$), such that the value of the binned spectrum ($Sp'_i(k)$) in the binning channel (k) is determined by applying the binning function ($f_k$) to the value of the spectrum ($Sp_i(h)$), obtained in step b), in each elementary channel (h) thus binned.

3. Method according to either one of the preceding claims, wherein, in step c), the value attributed to each binning channel ($Sp'(k)$) is a sum or a weighted sum of the value of the spectrum ($Sp(h)$), obtained in step b), in each binned elementary channel.

4. Method according to Claim 3, wherein the value attributed to each binning channel ($Sp'(k)$) is a weighted sum in which the content of each elementary channel is assigned a weighting coefficient dependent on the energy band ($E(h)$) associated with said elementary channel ($Sp(h)$).

5. Method according to any one of the preceding claims, wherein, in step c), the binning criterion (C) is a uniformity criterion, requiring the respective values of each binning channel (Sp'(k)) from which the binned spectrum (Sp') is composed to be equal, to within a predetermined tolerance.

6. Method according to any one of the preceding claims, wherein, in step d), each term of the basis vectors ( $V_n^K$ ) is defined for each binning channel and corresponds, in the energy range ($\Delta E(k)$) associated with said binning channel ($k$),

    - either to an attenuation of a calibration material ($calib_n$);
    - or to a relative proportion of photoelectric attenuation or of Compton scattering in said energy range;
    - or to a spectral discontinuity.

7. Method according to any one of the preceding claims, comprising a repetition of steps b) to e), such that

    - each step b) comprises obtaining a spectrum ($Sp_i$) in a different position of the detecting device (20) relative to the object;
    - each step c) is implemented considering the same criterion (C);
    - in each step e), the attenuation corresponding to the binned spectrum ($Sp'_i$) is associated with the same number of coordinates;
    - in step f), a characteristic of the object is estimated based on the coordinates obtained in each step e).

8. Method according to Claim 7, wherein step f) comprises:

    - discretizing the object (10) into two-dimensional or three-dimensional cells ($r$);
    - estimating an attenuation in each cell or the nature of the material from which each cell is composed based on the coordinates ($\alpha_{i,n}$) obtained in each step e).

9. Method according to any one of the preceding claims, wherein, in step c), the number of channels of the binned spectrum is equal to 2, such that forming the binned spectrum comprises determining a threshold, called the binning threshold, such that the first channel of the binned spectrum contains elementary channels corresponding to an energy lower than the binning threshold, and such that the second channel of the binned spectrum contains elementary channels corresponding to an energy higher than the binning threshold.

10. Device for detecting ionizing radiation, comprising:

    - a plurality of radiation detectors ($20_i$, $20_j$) that are adjacent to one another, each being able to interact with ionizing electromagnetic radiation, each detector comprising an electronic circuit able to generate a signal the amplitude of which depends on an energy deposited by the radiation interacting with said detector;
    - a circuit called the spectrometry circuit, allowing a distribution of signals generated by the radiation detector as a function of their amplitude to be obtained, so as to form a spectrum representative of said distribution;
    - a processing unit (22) configured to implement steps c) to f) of a method according to any one of Claims 1 to 9 using the spectra formed by the spectrometry circuit.

**Fig. 1A**

**Fig. 1B**

**Fig. 1C**

**Fig. 1D**

**Fig. 1E**

**Fig. 2A** (keV)

**Fig. 2B** (keV)

**Fig. 2C**

**Fig. 2D**

**Fig. 3A** (keV)

**Fig. 3B**

**Fig. 3C**

**Fig. 4A**

**Fig. 4B**

**Fig. 4C**

**Fig. 5**

**Fig. 6A**

**Fig. 6B**

**Fig. 6C**

48    56 65

**Fig. 6D**

**Fig. 7A**

**Fig. 7B**

**Fig. 7C**

**Fig. 7D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160054453 A

**Littérature non-brevet citée dans la description**

- **ALVAREZ R.** Near optimal energy selective x-ray imaging system performance with simple detectors. *Med. Phys.,* Février 2010, vol. 37 (2

- An optimised method for material identification using a photon counting detector. **BELDJOUDI GUILLAUME et al.** Nuclear Instruments and Methods in Physics Research. Section A: Accelerators, Spectrometers, Detectors and Associated Equipment. Elsevier BV, 28 Septembre 2011, vol. 663, 26-36
- **REBUFFEL.** Dual-energy X-ray imaging : benefits and limits. *Insight,* Octobre 2007, vol. 49 (10